Europäisches Patentamt

European Patent Office

Office européen des brevets

(11) Numéro de publication : **0 045 688**
**B1**

# (12) FASCICULE DE BREVET EUROPÉEN

(45) Date de publication du fascicule du brevet :
05.09.84

(21) Numéro de dépôt : 81401218.3

(22) Date de dépôt : 29.07.81

(51) Int. Cl.³ : **B 23 K 37/04// E01B29/46**

(54) **Dispositif de réglage de deux abouts de rails à raccorder par soudure.**

(30) Priorité : 30.07.80 FR 8016805

(43) Date de publication de la demande :
10.02.82 Bulletin 82/06

(45) Mention de la délivrance du brevet :
05.09.84 Bulletin 84/36

(84) Etats contractants désignés :
AT BE CH DE GB IT LI NL SE

(56) Documents cités :
EP-A- 0 016 664
FR-A- 2 115 661
FR-A- 2 396 834
FR-A- 2 440 809
FR-A- 2 450 904
GB-A- 2 003 780

(73) Titulaire : **C. Delachaux**
**119, Avenue Louis-Roche**
**F-92231 Gennevilliers (FR)**

(72) Inventeur : **Bommart, Patrick Théodore**
**4, avenue Talma**
**F-92000 Rueil-Malmaison (FR)**

(74) Mandataire : **Schrimpf, Robert et al**
**Cabinet Regimbeau 26, Avenue Kléber**
**F-75116 Paris (FR)**

## Description

La présente invention concerne un dispositif de réglage de deux abouts de rails à raccorder par soudure.

On a décrit dans le brevet FR-A-2 396 834 un dispositif de réglage de deux abouts de rails à raccorder par soudure, comprenant une structure rigide qui est formée de deux plaques d'appui alignées et reliées entre elles par une partie incurvée et qui est susceptible d'être disposée horizontalement en sorte que les deux plaques d'appui soient appliquées l'une sur un côté vertical de l'un des rails et l'autre sur le côté vertical correspondant de l'autre rail, la partie incurvée ménageant une zone d'accès autour des abouts, chaque plaque d'appui étant pourvue de deux appuis espacés et d'une presse de maintien pourvue d'une mâchoire mobile apte à venir en appui sur le côté vertical opposé du rail, chaque plaque d'appui étant pourvue d'une seconde presse de maintien, et les deux presses de maintien de chaque plaque d'appui étant associées respectivement aux deux appuis qui constituent respectivement les mâchoires fixes des deux presses de maintien.

On connaît, par ailleurs, d'après le brevet FR-A-2 115 661 un dispositif de réglage et de dressage d'abouts de rails qui comprend une plateforme relevable apte à rouler sur la voie ferrée et munie de règles transversales pour contrôler l'écartement des rails et de vérins pour agir sur les rails.

Les dispositifs des brevets FR-A-2 396 834 et 2 115 661 sont des dispositifs très lourds et encombrants qui nécessitent des vérins puissants pour leur fonctionnement.

Le dispositif qui fait l'objet de l'invention est un dispositif léger et maniable qui ne nécessite pas de vérin hydraulique et sert uniquement au réglage d'alignement des rails. Il constitue également un perfectionnement au dispositif du brevet FR-A-2 450 904, non compris dans l'état de la technique antérieure, en permettant d'améliorer le réglage de l'alignement des deux abouts de rails à raccorder.

L'invention concerne un dispositif de réglage du genre précité dans lequel les presses de maintien et les appuis s'appliquent sur les côtés verticaux des champignons des rails, et dans lequel l'une des presses de chaque plaque d'appui et l'appui qui lui est associé sont réglables par déplacement horizontal et perpendiculaire à la plaque d'appui.

Il est particulièrement avantageux que les deux presses réglables, appartenant respectivement aux deux plaques d'appui, soient celles qui sont les plus proches l'une de l'autre.

Selon une autre caractéristique de l'invention, le dispositif comporte un organe de réglage de dévers comprenant une levier amovible apte à prendre appui et basculer relativement à l'une ou l'autre des deux plaques d'appui, ce levier comportant à une extrémité un épaulement apte à appuyer sur la semelle du rail dont le dévers est à régler, ainsi qu'un organe de tension conçu pour être relié d'une part à l'autre extrémité du levier et d'autre part à un ancrage solidaire de la structure rigide.

Le dispositif faisant l'objet de la présente invention peut être porté par un chariot mobile tel qu'un chariot à deux roues du type diable ou tel qu'un chariot automoteur du type lorry ou encore être monté sur une installation fixe.

D'autres caractéristiques et avantages de l'invention seront mieux compris à la lecture de la description qui va suivre et qui se réfère aux dessins annexés, donnés uniquement à titre illustratif, et sur lesquels :

La Figure 1 est une vue en perspective d'un dispositif selon l'invention destiné à être placé sur deux rails dont les abouts sont à souder ;

La Figure 2 est une vue en coupe d'une des presses de maintien réglables du dispositif de la Figure 1 ;

La Figure 3 est une vue en coupe d'une des presses de maintien non réglables du dispositif de la Figure 1 ; et

La Figure 4 est une vue en coupe montrant l'organe de réglage de dévers du dispositif de la Figure 1.

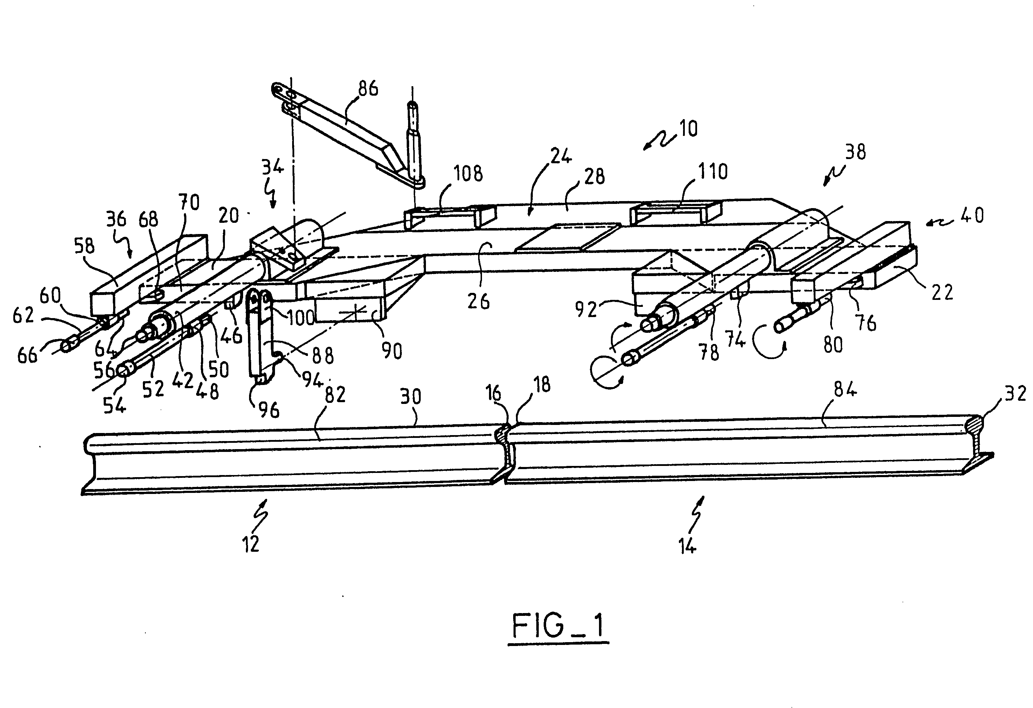

On a représenté sur la Figure 1, un dispositif de réglage 10 selon l'invention avant d'être mis en place sur deux rails 12 et 14 dont il convient de régler l'alignement avant soudure aluminothermique de leurs abouts respectifs 16 et 18.

Le dispositif 10 est constitué par une structure rigide formée de deux plaques d'appui 20 et 22, alignées et reliées entre elles par une partie sensiblement incurvée 24. Les plaques d'appui 20 et 22 sont formées chacune d'un caisson obtenu à partir d'un profilé de section rectangulaire et, de même, la partie 24 est formée de deux caissons 26 et 28 obtenus à partir du même profilé que les plaques d'appui 20 et 22. Les plaques d'appui 20 et 22 sont soudées sur le caisson 26 et celui-ci est soudé à son tour sur le caisson 28, les coupes des caissons 20, 22, 26 et 28 étant fermées par des tôles soudées. L'utilisation de caissons creux permet de renforcer la rigidité de la structure tout en l'allégeant.

La structure rigide ainsi obtenue est destinée à être disposée horizontalement en sorte que les deux plaques d'appui 20 et 22 soient appliquées respectivement sur le côté 30 du champignon du rail 12 et sur le côté correspondant 32 du champignon du rail 14.

La plaque d'appui 20 est pourvue d'une presse de maintien réglable 34 et d'une presse de maintien non réglable 36. De même, la plaque 22 est pourvue d'une presse de maintien réglable 38 et d'une presse de maintien non réglable 40.

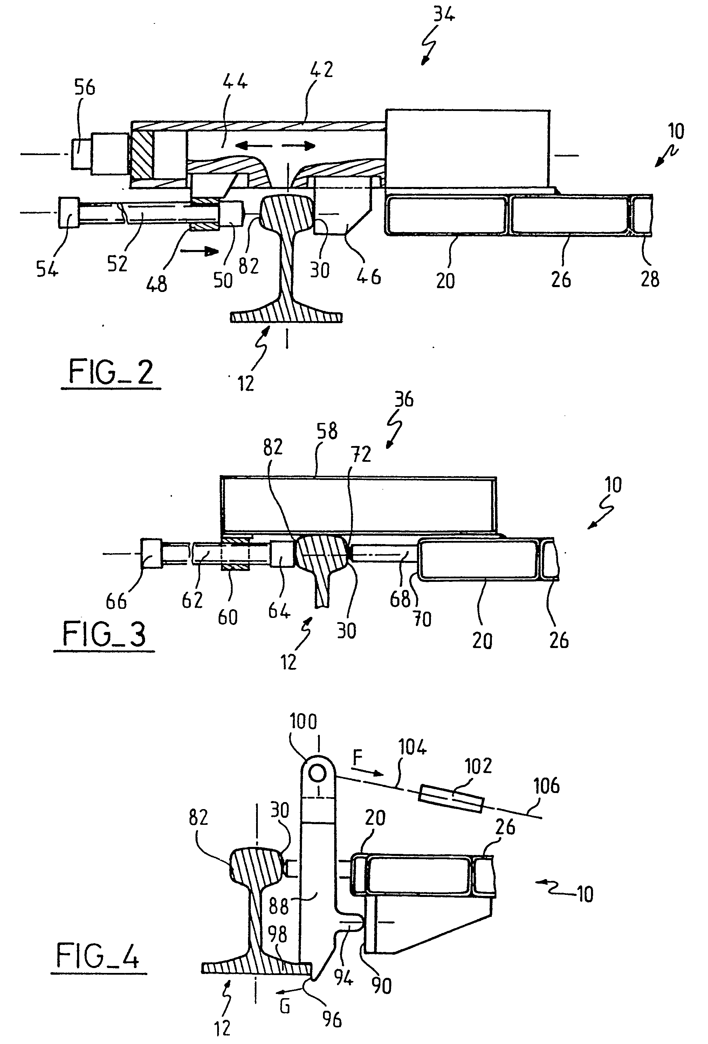

Comme représenté sur les Figures 1 et 2, la presse de maintien réglable 34 comporte un manchon 42 fixé horizontalement sur la face supérieure de la plaque d'appui 20 et du caisson 26. Ce manchon 42 reçoit à coulissement une pièce 44 supportant d'une part un appui fixe 46 constituant la mâchoire fixe de la presse 34 et d'autre part une pièce taraudée 48 servant au support de la mâchoire mobile 50 de la presse 34. Cette mâchoire mobile 50 est fixée à l'extrémité d'une tige filetée 52 qui traverse la pièce 48 et dont l'autre extrémité est pourvue d'une tête de commande 54. Cette tête 54 est avantageusement constituée par une douille femelle à six pans destinée à être entraînée en rotation par une clé appropriée (non représentée).

La pièce 44 qui supporte les mâchoires 46 et 50 est déplaçable horizontalement et perpendiculairement à la plaque d'appui 20, c'est-à-dire transversalement à la direction du rail 12. Ce déplacement est commandé par une tête d'entraînement 56 pouvant être actionnée par la même clé qu'indique précédemment, cette tête étant solidaire d'une tige filetée (non représentée) coopérant avec un taraudage de la pièce 44.

La presse de maintien 36 représentée sur les Figures 1 et 3 comporte un support horizontal 58 soudé transversalement sur la face supérieure de la plaque d'appui 20. Cette pièce 58 supporte un fourreau 60 fileté intérieurement pour recevoir une tige filetée 62 munie à une extrémité d'une mâchoire mobile 64 et à son autre extrémité d'une tête d'entraînement 66 pouvant être actionnée par la même clé que celle indiquée précédemment. La presse 36 comporte également une mâchoire fixe 68 constituée par une plaque semi-circulaire soudée sur la face verticale 70 de la plaque d'appui 20. Cette mâchoire fixe 68 comporte un point d'appui 72 recouvert d'un rechargement ponctuel de Stellite.

Les presses 38 et 40 sont similaires aux presses 34 et 36 ; ainsi, la presse 38 comporte une mâchoire fixe réglable 74 et la presse 40 comporte une mâchoire fixe non réglable 76. En outre, la presse 38 comporte une mâchoire mobile 78 et la presse 40 comporte une mâchoire mobile 80.

Les mâchoires 46 et 48 sont destinées à être appliquées sur le côté 30 du champignon du rail 12 et les mâchoires 74 et 76 sont destinées à être appliquées sur le côté 32 du champignon du rail 14 en formant quatre appuis dont l'alignement peut être modifiée en actionnant les presses réglables 34 et 38. Les mâchoires mobiles 50 et 64 des presses 34 et 36 sont destinées à être appliquées sur le côté vertical opposé 82 du champignon du rail 12 et les mâchoires mobiles 78 et 80 des presses 38 et 40 sont destinées à être appliquées sur le côté opposé 84 du champignon du rail 14.

Le dispositif représenté sur la Figure 1 comporte également un porte-creuset 86 orientable horizontalement et destiné à supporter un creuset (non représenté) destiné à la soudure aluminothermique des deux abouts 16 et 18 une fois que ceux-ci auront été convenablement réglés par le dispositif de l'invention.

Comme représenté sur les Figures 1 et 4, le dispositif de l'invention comporte également un organe de réglage de dévers comprenant un levier amobile 88 apte à prendre appui et basculer relativement à l'une ou l'autre des deux plaques d'appui 20 et 22, dans un plan vertical transversal à la direction des rails 12 et 14. A cet effet, les plaques d'appui 20 et 22 sont munies respectivement de deux plaques verticales 90 et 92 sur lesquelles peut être appliqué le levier 88. Le levier 88 comporte une protubérance 94 destinée à venir en appui sur l'une ou l'autre des deux plaques 90 et 92. Le levier 88 comporte à son extrémité inférieure un épaulement 96 apte à coopérer sur la semelle du rail dont le dévers est à régler. Ainsi, comme représenté sur la Figure 4, l'épaulement 96 du levier 88 est appliqué sur la semelle (ou patin) 98 du rail 12. L'extrémité supérieure du levier 88 est pourvue d'une chape 100 destinée à recevoir un organe de tension susceptible de faire basculer le levier 88 par rapport à la structure rigide. Cet organe de tension comporte un tendeur à lanterne 102 avec deux tiges filetées à pas inversés 104 et 106, la tige 104 étant conçue pour être fixée à la chape 100, et la tige 106 étant conçue pour être fixée sur un ancrage 108 ou 110 solidaire du caisson 24, selon que le rail dont le dévers est à modifier est le rail 12 ou le rail 14.

En actionnant le tendeur à lanterne 102 de manière à rapprocher la chape 100 de l'ancrage 108, celle-ci se rapproche de l'ancrage 108 dans le sens représenté par la flèche F et l'épaulement 96 du levier 84 pivote dans la direction de la flèche G (Figure 4).

Le dispositif représenté sur la Figure 1 s'utilise de la manière suivante.

Les rails 12 et 14 sont libérés de leurs éclisses sur une longueur de 1 ou 2 mètres.

Après avoir procédé au préalable au réglage de la distance intercalaire entre les abouts 16 et 18 à souder, par un procédé approprié connu en soi, on amène le dispositif 10 en position sur les rails 12 et 14. On effectue alors un serrage provisoire des presses 34, 36, 38 et 40 de manière à maintenir le dispositif en position et on règle les presses 34 et 38 de manière à aligner les côtés verticaux intérieurs 30 et 32 des deux rails 12 et 14. On relève alors légèrement les deux abouts à souder en utilisant soit des cales, soit des vérins à vis ou hydrauliques, de manière à conférer un « pointu » aux rails. On vérifie alors à l'aide d'une règle que l'alignement des côtés intérieurs des champignons des rails est correct et on vérifie à l'aide d'une autre règle placée sur le dessus du champignon du rail entre les presses 34 et 38 que le pointu des rails est correct.

Si les semelles des deux rails ne sont pas parfaitement alignées, on met en place le levier 88 en face du rail dont la semelle doit être écartée par rapport au dispositif 10 et on utilise le tendeur à lanterne 102 pour modifier le dévers de ce rail. Une fois que les deux semelles sont alignées, on bloque les presses 34, 36, 38 et 40 et on peut alors procéder à l'opération de soudure.

Pour cela, on se sert du porte-creuset 86 pour mettre en place un creuset (non représenté) au-dessus des abouts 16 et 18 et on procède à la soudure aluminothermique proprement dite. Une fois la soudure terminée on procède, de manière en soi connue, à l'ébavurage de la soudure ainsi obtenue.

Le dispositif peut être porté, par un chariot mobile tel qu'un chariot à deux roues du type diable ou par un chariot déplaçable sur rails, du type lorry, ou utilisé sur une installation fixe.

Le dispositif de l'invention peut être utilisé à la pose ou à la réfection de voies ferrées.

## Revendications

1. Dispositif de réglage de deux abouts (16, 18) de rails (12, 14) à raccorder par soudure, comprenant une structure rigide (10) qui est formée de deux plaques d'appui alignées (20, 22) et reliées entre elles par une partie incurvée (24) et qui est susceptible d'être disposée horizontalement en sorte que les deux plaques d'appui soient appliquées l'une sur un côté vertical (30) de l'un des rails (12) et l'autre sur le côté vertical correspondant (32) de l'autre rail (14), la partie incurvée ménageant une zone d'accès autour des abouts (16, 18), chaque plaque d'appui (20, 22) étant pourvue de deux appuis espacés et d'une presse de maintien (36, 40) pourvue d'une mâchoire mobile (78, 80) apte à venir en appui sur le côté vertical opposé (82, 84) du rail (12, 14), chaque plaque d'appui (20, 22) étant pourvue d'une seconde presse de maintien (34, 38) et les deux presses de maintien (34, 36, 38, 40) de chaque plaque d'appui (20, 22) étant associées respectivement aux deux appuis (46, 48, 74, 76) qui constituent respectivement les mâchoires fixes des deux presses de maintien, caractérisé par le fait que les presses de maintien (34, 36, 38, 40) et les appuis (46, 48, 74, 76) s'appliquent sur les côtés verticaux des champignons des rails (12, 14), et par le fait que l'une des presses (34, 38) de chaque plaque d'appui et l'appui (46, 74) qui lui est associé sont réglables par déplacement horizontal et perpendiculaire à la plaque d'appui.

2. Dispositif selon la revendication 1, caractérisé par le fait que les deux presses réglables (34, 38) appartenant respectivement aux deux plaques d'appui (20, 22) sont celles qui sont les plus proches l'une de l'autre.

3. Dispositif selon la revendication 1, caractérisé par le fait qu'il comporte un organe de réglage de dévers comprenant un levier amovible (88) apte à prendre appui et basculer relativement à l'une ou l'autre des deux plaques d'appui (20, 22), ce levier comportant à une extrémité un épaulement (96) apte à appuyer sur la semelle (98) du rail dont le dévers est à régler, ainsi qu'un organe de tension (102) conçu pour être relié d'une part à l'autre extrémité du levier et d'autre part à un ancrage (108, 110) solidaire de la structure rigide.

4. Chariot mobile équipé d'au moins un dispositif selon l'une des revendications 1 à 3.

5. Installation fixe équipée d'au moins un dispositif selon l'une des revendications 1 à 3.

## Claims

1. A device for setting two ends (16, 18) of rails (12, 14) to be joined by welding, comprising a rigid structure (10) which is formed by two aligned supporting plates (20, 22) interconnected via an inwardly curved part (24) and is adapted to be so disposed horizontally that the two supporting plates are applied one against a vertical side (30) of one of the rails (12), and the other against the corresponding vertical side (32) of the other rail (14), the inwardly curved part creating a zone of access around the ends (16, 18), each supporting plate (20, 22) being provided with two spaced-apart supports and a retaining clamp (36, 40) provided with a movable jaw (78, 80) adapted to bear against the opposite vertical side (82, 84) of the rail (12, 14), each supporting plate (20, 22) being provided with a second retaining clamp (34, 38), the two retaining clamps (34, 36, 38, 40) of each supporting plate (20, 22) being associated respectively with the two supports (46, 48, 74, 76) which form respectively the fixed jaws of the two retaining clamps, characterized in that the retaining clamps (34, 36, 38, 40) and the supports (46, 48, 74, 76) are applied against the vertical sides of the heads of the rails (12, 14), and in that one of the clamps (34, 38) of each supporting plate and its associated support (46, 74) is adjustable by horizontal displacement perpendicular to the supporting plate.

2. A device according to Claim 1, characterized in that the two adjustable clamps (34, 38) associated respectively with the two supporting plates (20, 22) are the clamps which are closest to one another.

3. A device according to Claim, 1, characterized in that it comprises a cant-adjusting member comprising a detachable lever (88) adapted to bear on and tilt relative to one or the other of the two supporting plates (20, 22) such lever having at one end a shoulder (96) adapted to bear against the base (98) of the rail whose cant is to be adjusted, and also a tensioning member (102) adapted to be connected on the one hand to the other end of the lever and on the other hand to an anchorage (108, 110) fast on to the rigid structure.

4. A moving carriage having at least one device according to one of Claims 1 to 3.

5. A fixed installation having at least one device according to one of Claims 1 to 3.

## Ansprüche

1. Vorrichtung zum Einrichten von zwei Enden (16, 18) von durch Schweißen zu verbindenden Schienen (12, 14), mit einem starren Aufbau (10), welcher durch zwei fluchtende und miteinander durch einen gekrümmten Teil (24) verbundene Anlageplatten (20, 22) gebildet ist und welcher horizontal anordbar ist, so daß die eine der beiden Platten an einer Vertikalseite (30) der einen der Schienen (12) und die andere an der entsprechenden Vertikalseite (32) der anderen Schiene (14) zur Anlage kommt, wobei der gekrümmte Teil eine Zugriffszone um die Enden (16, 18) ausspart, wobei jede Anlageplatte (20, 22) mit zwei im Abstand liegenden Anlagen und einer mit einer beweglichen Klemmbacke (78, 80), welche an der gegenüberliegenden Vertikalseite (82, 84) der Schiene (12, 14) zur Anlage kommt, versehenen Haltepresse (36, 40) versehen ist, wobei jede Anlageplatte (20, 22) mit einer zweiten Haltepresse (34, 38) versehen ist und die beiden Haltepressen (34, 36, 38, 40) jeder Anlageplatte (20, 22) den beiden Anlagen (46, 48, 74, 76), die jeweils die feststehenden klemmbacken der beiden Haltepressen bilden, zugeordnet sind, dadurch gekennzeichnet, daß die Haltepressen (34, 36, 38, 40) und die Anlagen (46, 48, 74, 76) sich an die Vertikalseiten der Schienenköpfe (12, 14) legen und daß die eine der Pressen (34, 38) einer jeden Anlageplatte und die ihr zugeordnete Anlage (46, 74) durch horizontale und zur Anlageplatte senkrechte Verstellung einstellbar sind.

2. Vorrichtung nach Anspruch 1, dadurch gekennzeichnet, daß die beiden zu den beiden Anlageplatten (20, 22) gehörigen einstellbaren Pressen (34, 38) diejenigen sind, die einander am nächsten liegen.

3. Vorrichtung nach Anspruch 1, dadurch gekennzeichnet, daß sie eine Einrichtung zur Einstellung der Schienenneigung umfaßt, welche einen lösbaren Hebel (88) aufweist, welcher bezüglich der einen oder der anderen der beiden Anlageplatten (20, 22) zur Anlage kommen und schwenken kann, wobei der Hebel an einem Ende einen Absatz (96), welcher sich gegen den Fuß (98) der Schiene, deren Neigung einzustellen ist, lehnen kann, sowie eine Spanneinrichtung (102) aufweist, welche einerseits mit dem anderen Ende des Hebels und andererseits mit einer mit dem starren Aufbau fest verbundenen Verankerung (108, 110) verbindbar ist.

4. Fahrbarer Wagen, welcher mit wenigstens einer Vorrichtung nach einem der Ansprüche 1 bis 3 ausgestattet ist.

5. Feststehende Einrichtung, welche mit wenigstens einer Vorrichtung nach einem der Ansprüche 1 bis 3 ausgestattet ist.

FIG_1

0 045 688

FIG_2

FIG_3

FIG_4